# EUROPEAN PATENT APPLICATION

(11) **EP 3 550 481 A1**
(43) Date of publication of application: **09.10.2019**
(21) Application number: 19167351.6
(22) Date of filing: 04.04.2019
(51) Int. Cl.: G06Q 10/04, G06Q 50/08

(54) **METHOD AND SYSTEM FOR MANAGING AN UNDERWATER BOTTOM IN AN AREA**

(30) Priority: 06.04.2018 BE 201805235
(71) Applicant: Dredging International N.V., 2070 Zwijndrecht (BE)
(72) Inventor: Goethals, Frederik, 9080 Beervelde (BE); Mol, Arjan Cornelis Sybren, 4731 AN Oudenbosch (NL)
(74) Representative: Brouwer, Hendrik Rogier

(57) **Abstract**

Described is a method for managing an underwater bottom in an area by means of dredging and/or arranging material. The method comprises of determining the current state of the underwater bottom at positions in the area; determining the value of input variables, which input variables can have an effect on the state value of the underwater bottom at the positions; providing a trained artificial neural network, an input layer of which comprises the value of the input variables and an output layer the state value at the positions, and using the neural network to determine at the positions future state values of the underwater bottom resulting from the current value of the input variables. The future state values at the positions are then compared to a threshold value for the state at these positions, and dredging and/or arranging material on the underwater bottom at those positions where the state value exceeds or falls below the threshold value is carried out.

## Description

### TECHNICAL FIELD OF THE INVENTION

The present invention relates to a method for managing an underwater bottom in an area. The invention also relates to a system for managing an underwater bottom in an area, and to a computer program comprising program instructions for having a computer perform the method. The invention further relates to a computer configured to execute such a computer program.

### BACKGROUND OF THE INVENTION

Dredging companies perform regular maintenance on waterways, for instance in order to counter the effects of silting or alluvial deposits and/or in order to prevent soil erosion. It can also be important to clean up contaminants caused by sources of contamination in an area. An increased turbidity of the water as a result of entry into the water of fine sediment particles can thus damage fauna and flora in the area, for instance coral reefs.

The morphological evolution of river, canals and sea-beds can be very uncertain, and chance occurrences can have a big impact. The management - or maintenance - of an underwater bottom in an area therefore requires a large number of survey campaigns to be carried out on a regular basis in order to verify whether regulations imposed by governments and other authorities are being complied with, and to decide where and when dredging and/or arranging of material is required in order to enable regulation compliance. The risk of non-compliance associated with the present way of working depends greatly on the frequency with which the survey campaigns are carried out, and a balance is sought between the number of survey campaigns and the risk of non-compliance.

In addition, the prior art method results in a relatively inaccurate estimate of the managing operations required, particularly of the quantity of material to be poured and/or arranged at a determined point in time at a determined position in the area. This lack of accuracy often results in the number of managing operations being too high relative to the required number, this resulting in additional costs and also in increased inconvenience to the shipping traffic in the area, or in the relevant waterway of the river network in the area.

### SUMMARY OF THE INVENTION

The present invention has for its object to provide a more efficient method and corresponding system for managing an underwater bottom in an area.

These and other objects are achieved by providing a method with the features as stated in claim 1. Particularly provided is a method for managing an underwater bottom in an area by means of dredging and/or arranging material at positions in the area with a device suitable for this purpose, comprising the steps of:
a) determining the current state of the underwater bottom at positions in the area by measuring a state value at the positions;
b) determining the value of input variables, which input variables can have an effect on the state value of the underwater bottom at the positions;
c) providing a trained artificial neural network, an input layer of which comprises the value of the input variables and an output layer the predicted state value at the positions,
d) using the neural network to determine at the positions future state values of the underwater bottom resulting from the current value of the input variables;
e) comparing the future state values at the positions to a threshold value for the state at these positions; and
f) dredging and/or arranging material on the underwater bottom at those positions where the state value exceeds or falls below the threshold value.

The steps of the method are preferably performed via a digital network under the control of a computer. The current value of input variables and/or of the state of the underwater bottom can also comprise a prediction, for instance the expected precipitation according to a weather forecast.

With the invented method managing operations such as dredging, surveying, rock dumping, soil analysis and optionally even recovery of sunken objects can be performed with the combination of time and position most optimal therefor and in a relatively extensive area, for instance a river network with an overall length of 160 km and more. It is noted that recovery of sunken objects or performing of soil analysis are not determined by any prediction per se, but rather indirectly, for instance in the context of bundling work operations in order to achieve more efficient planning schedule or to limit inconvenience.

In a preferred embodiment the area according to the invention comprises a flow area of a river network, which term flow area is known to the skilled person. It is however also possible for the area to extend further than the flow area of the river network.

The state of the underwater bottom can be defined in different ways. The state can thus for instance comprise the current underwater bottom depth at positions in the area. The state value at a position is then the value of the underwater bottom depth. The input variables stated in the method may have an effect on the current state values at positions in the area, for instance the underwater bottom depth in situ. Input variables can for instance comprise the flow rate of a river which has been measured at the edge of the area, calculated or predicted, or the amount of precipitation in a part of the area, as will be further elucidated below. Other suitable input variables can comprise local soil characteristics and even shipping movements. It is indeed the case that relatively large vessels travelling up a river cause soil erosion in receding low water due to screw action. The ship characteristics and the dangers or navigation routes for all ships exceeding 300 DWT are available online.

The neural network in each case decides whether an input variable has an effect and the degree to which this effect is felt, namely as a change in a calculated state value of the underwater bottom at the positions. In some cases input variables will also be able to comprise the current state values of the underwater bottom. In the case of bottom deepening it is thus for instance possible that the current bottom depth at a determined position has an effect on the predicted bottom depth at other positions.

It is possible and usual to divide an area to be treated into so-called project sections, each comprising a sub-area in which criteria such as navigability criteria are shared. An extensive management area can easily comprise more than 200 project sections, each having different criteria in respect of riverbed level, margin and maximum exceedance area. Such a large number of project sections requires an easily, accurately and rapidly updated overview of all parameters which may be relevant for operational management and/or provision of information to interested persons, such as project members and project roles within the project team, and a client. The method and corresponding system (or platform) according to the invention provides such an overview. It is indeed the case that the system can be set up as a platform for almost real-time reporting to the client, who gains access to relevant project indicators without the risk of misinterpretation and/or time delay.

The method and system according to the invention make use of a trained neural network. This allows surprisingly accurate modelling of predictions regarding the state of the underwater bottom at positions in the area, for instance riverbed levels of the channels present in the area, and comparison thereof to threshold values which are for instance dictated by dredging contract constraints. Because the computing time required is relatively short relative to the computing time required for deterministic models, such predictions can be made in the short term. This allows equipment required for the management to be employed on time and in efficient manner. The results of the system provide for instance priority points in time, before which each of the sub-areas has to be treated in order to comply with the threshold values. The threshold values can differ per sub-area.

In order to employ devices equipped for the management of the area on time and in efficient manner and eventually minimize the time spent on management, the invention provides regular predictions of the depth levels of the underwater bottom at positions in the area. By making use of the trained neural network such morphological predictions can be made in the short term, for instance daily. The invention is not limited hereto and, if desired, predictions can also be made over a period of for instance 6 months, with a monthly frequency.

The invented system preferably comprises databases in which the predictions and optionally also measurement data coming from survey campaigns are stored. After new predictions are uploaded to the database of the invented system, these new predictions are compared to the threshold values or criteria imposed on each sub-area requiring maintenance. The results can be summarized in practical manner on a dashboard which provides for instance the order of dredging priorities of the waterways of the area. In this way the dashboard functions as a timeline in which all past, running and planned activities of every managing operation are integrated. Managing operations can for instance comprise dredging, survey, rock dumping, soil analysis and recovery of objects lying below the waterline.

The method according to the invention also makes it possible to predict at regular points in time, for instance daily, the spread of a contaminant over the area and to propose a treatment on the basis of these predictions, and to modify the treatment as desired on the basis of adjusted predictions.

The invention makes use of an artificial neural network. This network is able to distil patterns from large amounts of data. In the context of the present invention the neural network is particularly able to determine at a large number of positions in the area future state values of the underwater bottom resulting from the current value of input variables of the area. A current value of an input variable can (and will preferably) comprise information about future values of the input variable in question.

The architecture of a neural network comprises in known manner an input layer of input nodes, at least one 'hidden' layer consisting of one or more layers of nodes, and an output layer of output nodes. According to the invention, the input layer of the artificial neural network comprises the value of the input variables and the output layer comprises the predicted state value at the positions. In an embodiment a current state value can likewise be an input variable. A neural network can comprise tens of layers, which can each comprise a large number of nodes, for instance of several tens to hundreds or even thousands. A complex neural network with more than two intermediate layers is also referred to as a 'deep neural network'.

The input variables in the form of a large number of input parameter values are transmitted to a hidden layer of nodes with a weighting factor with a value which has been obtained by training of the network. The data of the hidden layer of nodes are then passed on to other hidden layers, always taking into account a weighting factor, and eventually to the output nodes, once again with a weighting factor. The weighting factors represent the relative importance assigned to a determined item of data (node). The neural network was trained beforehand to achieve a relatively realistic output. This procedure is known under the name machine learning, and comprises inter alia of determining the values of the weighting factors per node of the neural network.

If the neural network comprises a simple feed forward network, as described above, the training is performed with a method referred to as supervised learning. A large number of examples is provided to the neural network, in the context of the present invention for instance the output of a deterministic model which shows the relationship between the values of a large number of input variables (precipitation, droughts and heat waves, weather forecasts, discharge flow rates, and so on) and the state of the bottom, for instance sedimentation or erosion, at a large number of positions in the area. It is also possible to show these relationships as the result of an experimental measurement programme. All parameters (nodes) are then given a random value and the output is determined. This output is compared to the desired (measured or deterministically determined) result and the error is ascertained. Parameters, such as the weighting factors, are modified on the basis of the ascertained errors. The more the output of the neural network deviates from the desired output, the more the parameters are modified. Each parameter can here obtain a positive or negative vector, which indicates to what extent the parameter must be modified in order to have the output correspond more closely to the desired output. A mathematical method commonly used therefor is optimization, wherein the minimum errors are detected in small steps, for instance with a method referred to as 'gradient descent'.

It is the case for the minimum errors that the neural network produces an outcome which varies least from the known, given outcome. With large training sets the parameters can be tuned increasingly better so that reliable results can be obtained. Training of the neural network, in this case modifying the parameters in order to minimize the differences between the output values of the neural network and the correct output values, is also referred to with the term 'backpropagation'.

In an embodiment of the invention a method is provided which also comprises the step of determining the future state of the underwater bottom at positions in the area by measuring a state value at the positions. By determining the value of these future states the future values predicted by the artificial neural network can be compared to the measured values and the parameters of the network can be modified accordingly. It is noted that a number of input variables, such as for instance the precipitation in or at edges of the area, can also be based on predictions and not on the currently measured state of for instance the bottom depth itself. It is however possible to identify trends for the progression of these input variables, which trends can increase the accuracy of their own predictability and thereby also the predictability of for instance the bottom depth. In the context of the invention the learning can thus comprise various aspects, such as the prediction of the bottom depth on the basis of a certain set of input variables; and the (improvement of the) prediction of the (natural) variations in these input variables.

Another embodiment of the method according to the invention therefore has the feature that the neural network is self-learning and the value of weighting factors of the nodes is adjusted to measurements of the state value at the positions. Future predictions are hereby improved. A network according to the present embodiment is also referred to with the term 'recurrent neural network'.

In yet another embodiment of the method the neural network comprises a convolutional neural network. In a convolutional neural network filters are applied, whereby not all notes are connected to each other. Such a network is particularly suitable for the present application, this being the management of an underwater bottom in an area, among other reasons because a first sub-area in the area need not necessarily have an effect on a second sub-area in the area. The area to be modelled is divided into smaller sub-areas, generally referred to with the term 'local receptive fields', by the filtering. 'Local receptive fields' of for instance the input layer are generally only connected to one node in the first hidden layer of nodes, and moreover share the parameters for the weighting of the input variables. Convolutional neural networks are per se known.

A hydrodynamic model of the area can for instance be applied as first training step for the purpose of training the artificial neural network. Such a model preferably comprises a calculation grid of the area, wherein each intersection of the calculation grid defines a position in the area by means of a set of unique (x,y) coordinates. A bathymetry of the area produces a depth coordinate z for each position. It will be apparent that the density of the calculation grid (the number of positions per unit length) can be chosen freely depending on the desired accuracy. A suitable hydrodynamic model calculates at least the water level (water depth), the flow speed and for some applications also the degree of contamination at a number of positions in the area, and preferably at all positions.

If desired, the hydrodynamic model can comprise a sediment transport model. Such a model can for instance use as input variables flow speeds at positions in the area as well as fall velocities of bottom particles which enter the water. These fall velocities can for instance be obtained from the measured granulometry of the bottom material. On the basis hereof it is possible to calculate at a number of positions in the area, and preferably at all positions, how far away from the source of contamination a bottom particle is entrained by the current, and where this particle may eventually descend to the bottom. Turbidity occurring in the current can if desired also be taken into account in such a sediment transport model. The output of the sediment transport model can for instance comprise the content of fine bottom particles in the water for positions in the area.

The state of the underwater bottom in the area can comprise any quantity relevant to the management of the area. The state can thus comprise the degree of contamination of the soil, or the depth profile of the underwater bottom. In an embodiment of the method the state of the underwater bottom comprises the depth of the underwater bottom.

It is noted that the state of the underwater bottom, for instance the depth profile of the bottom, is adjusted in an embodiment of the invention by taking into account the changes for instance made in the depth profile of the bottom by the bottom management. These changes can be determined for instance by measuring the quantity of excavated underwater bottom at a determined position of the dredging device which carries out the excavation. In this way the depth profile can be continuously adjusted as a result of the treatment.

In another embodiment of the invention a method is provided wherein determination of the current state of the underwater bottom at positions in the area by measuring a state value at the positions comprises a bathymetry of the underwater bottom.

Another embodiment relates to a method wherein the input variables comprise dynamic parameters which change during a period associated with the management. The input variables preferably comprise quantities of precipitation, tidal currents, wind and wave fields and/or the production of a source of contamination.

In another preferred embodiment of the method the area is delimited by boundaries and the input variables comprise water levels and flow rates at the boundaries, particularly time series of water levels and flow rates at the boundaries. Such time series can for instance be requested from local meteorological institutes, government agencies and managing authorities, and function as time-dependent boundary conditions for a possible training model in the form of a hydrodynamic model.

Another embodiment of the method according to the invention has the feature that the data relating to the wind and wave fields comprise time series of respectively wind speed vectors and wave heights, periods and directions for positions in the area. This information can for instance be obtained from consultants engaged in weather forecasting.

In yet another embodiment of the method according to the invention the data relating to the production of the source of contamination comprise the amount of contamination from the source or sources of contamination produced per unit time. In the case of for instance a heat source the production can be the amount of heat produced per unit time. In another example, in which a salt source causes contamination, the production can be the quantity of salt introduced into the water per unit time.

The invented method can also be applied to minimize the consequences for the natural environment during the treatment, wherein the source of contamination is the bottom treatment device itself. During treatment of an area fine particles can for instance enter the water via an overflow of a trailing suction hopper dredger and form a plume which spreads over the area for treating behind the trailing suction hopper dredger. This causes an increased turbidity of the water, which can cause damage to for instance coral reefs. The invented method makes it possible to assess the consequences and take measures in the short term.

According to another embodiment of the invention, a method is provided which comprises of dredging and/or arranging material on the underwater bottom at those positions where the state value obtained by the neural network exceeds or falls below the threshold value during a predetermined period of time. Various criteria can be applied here. It is thus possible in an embodiment of the invention to perform the dredging and/or arranging of material only if the degree of exceeding or falling below continues for a determined period, preferably a number of days. It is also possible to use an mean measure for the calculated state values and to compare this to the threshold value. The same applies when work operations are altered or not carried out, for instance in the case of turbidity exceedance.

It is advantageous to characterize the method according to the invention in that the state of the underwater bottom at the positions is digitally visualized for a manager of the area. operator of the dredging device. Other quantities, such as the value of the input variables, can be digitally visualized if desired.

The invention likewise relates to a system for managing an underwater bottom in an area. The system for managing an underwater bottom in an area by means of dredging and/or arranging material at positions in the area with a device suitable for this purpose comprises a central computer which is connected via a digital network to the device and which is configured to perform a method comprising at least the steps of:
a) determining the current state of the underwater bottom at positions in the area by measuring a state value at the positions;
b) determining the value of input variables, which input variables can have an effect on the state value of the underwater bottom at the positions;
c) providing a trained artificial neural network, an input layer of which comprises the value of the input variables and an output layer the state value at the positions,
d) using the neural network to determine at the positions future state values of the underwater bottom resulting from the current value of the input variables;
e) comparing the future state values at the positions to a threshold value for the state at these positions; and
f) dredging and/or arranging material on the underwater bottom at those positions where the state value exceeds or falls below the threshold value.

The threshold value can comprise any value which is suitable for the work operations to be carried out. It is also possible to use a lower threshold value than necessary so that the dredging and/or arranging of material on the underwater bottom at those positions can be carried out before the state value will exceed or fall below the threshold value. The method thus allows proactive intervention before the threshold value is reached, so that the undesired state is never reached.

The computer is configured according to the invention to perform the method and is loaded for this purpose with a computer program comprising program instructions for performing the method. The advantages of such a system have already been elucidated with reference to the above discussed method and will not be repeated here. The system according to the invention collects the required input variables and calculates the degree of change of the state values at positions in the area as a result of the change of input variables. In an embodiment of the device, the device compares the model output to threshold values for positions in the area and, on the basis of this comparison, transmits control signals via the digital network to the bottom treatment device which optionally adjust the route thereof. In another embodiment the model output is made visible on a digital screen, on the basis of which an operator of the bottom treatment device optionally adjusts the route. The model output can if desired be continuously recalculated by the computer in accordance with changes occurring in the input variables, particularly the dynamic input variables.

Finally, it is stated that the embodiments of the invention described in this patent application can be combined in any possible combination of these embodiments.

### BRIEF DESCRIPTION OF THE FIGURES

The invention will now be further elucidated on the basis of the exemplary embodiments shown in the following figures, without otherwise being limited thereto. Herein:
figure 1 shows schematically a flow area for a river network which can be maintained with a method according to the invention;
figure 2 shows schematically a flow diagram of an embodiment of a method according to the invention;
figure 3 shows schematically an embodiment of a system with which the method according to the invention can be performed;
figure 4 shows a schematic view of an embodiment of a device for obtaining trained parameters of the neural network, with which model calculations are performed; and
figures 5A-5D show examples of a bathymetry of a river section and the output of a calculation obtainable with an embodiment of the method.

### DESCRIPTION OF EXEMPLARY EMBODIMENTS

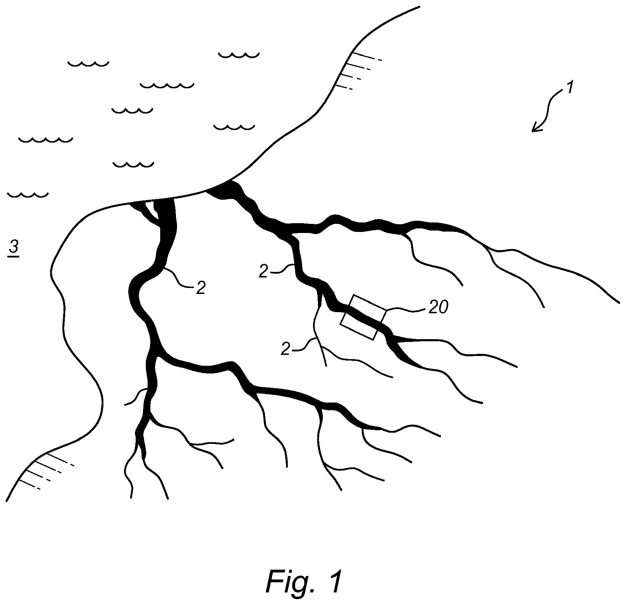

Referring to figure 1, an area 1 comprising a number of rivers 2 with river distributaries is shown schematically. In the shown example the rivers debouch into a sea 3. Regular maintenance to rivers 2 is necessary in order to counter the effects of silting or alluvial deposits in rivers 2 and/or in order to prevent soil erosion of rivers 2. According to the known method, the management of the underwater bottom in rivers 2 of area 1 requires soil analysis to be performed on a regular basis in order to verify where bottom depths may be becoming too small and in order to decide where and when dredging and/or arranging of material is required to be able to keep rivers 2 navigable.

The bottom depths at positions of river network 2 are subject to change due to sedimentation and at other positions possibly also due to erosion, wherein the bottom depth can (temporarily) increase. Erosion and sedimentation in rivers 2 of the area can be affected by a large number of variables 4, including intrinsic variables such as the soil and/or sediment properties, and extrinsic variables such as tidal currents, wind speed, wind direction, wave height and direction, and possibly also air pressure and precipitation in the area 1. These variables have an effect on flow speeds, flow directions and bottom shear stresses in rivers 2 at the positions in area 1, which eventually result in changing bottom depths. A prediction 7 of future bottom depths on the basis of available input variables 4 is the subject of the invented method.

An embodiment of the method 5 for managing the and water bottom in area 1 enables the water depths in area 1 to be predicted, whereby future dredging operations can be planned.

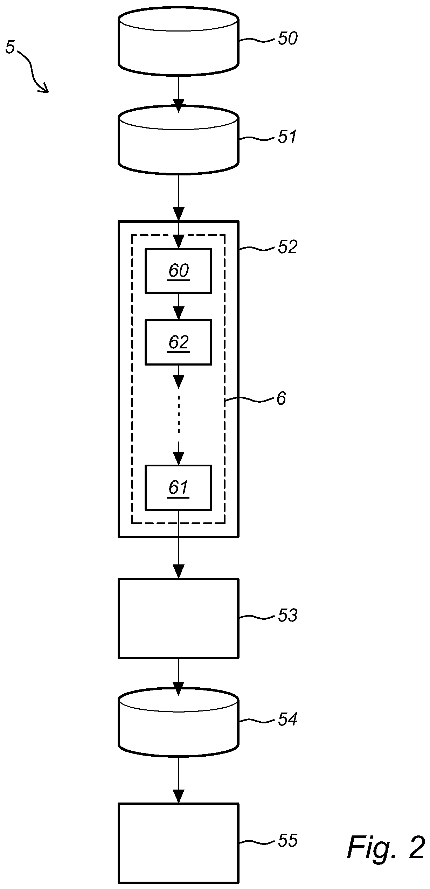

Referring to figure 2, in a first step 50 the current depths of the underwater bottom are for this purpose determined at a relatively large number of positions in area 1 and these data are stored. These depth measurements can take place in known manner, for instance by bathymetric measurements. A depth value is thus determined at each of the positions. In addition, the value of available input variables 4 is determined in a second step 51, for instance by measuring, wherein the available input variables 4 can comprise the above stated input variables 4. These data are also stored. Suitable input variables 4 preferably have an effect on the bottom depth of rivers 2 at the chosen positions. In a step 52 the thus obtained values of input variables 4 are added to a trained artificial neural network 6, an input layer 60 of which comprises the value of input variables 4 and an output layer 61 the bottom depths at the chosen positions in area 1. Neural network 6 can comprise a plurality of intermediate layers 62 and determines, as output 7, at the chosen positions future bottom depths of rivers 2 resulting from the current value of input variables 4. These calculated future bottom depths at the positions in area 1 are then compared in a comparator 53 to a predetermined threshold value for the bottom depth at these positions. This comparison eventually results in an overview 54 of those positions in area 1 where the bottom depth exceeds or falls below the threshold value. In a step 55 dredging then takes place and/or material is dumped on the underwater bottom at a chosen point in time at the positions where exceeding or falling below occurs.

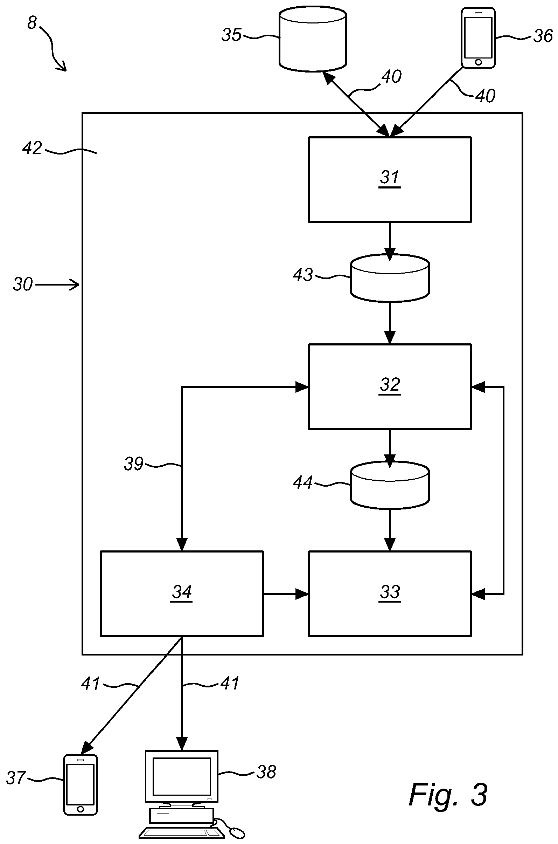

The above stated steps preferably take place via a digital network under the control of a computer. Referring to figure 3, an embodiment is shown of a system 8 with which the method according to the invention can be performed. System 8 comprises a central computer 30 which is connected via a digital network (40, 41) to one or more bottom treatment devices (not shown) and which is configured to perform the method. In this embodiment the program instructions for having computer 30 perform the method are stored in an observation module 31, a prediction module 32, a decision module 33 and a warning module 34.

Observation module 31 collects substantially all historical, present and predicted data (input variables 4 and output data 7) necessary for making the predictions. Observation module 31 can be connected via a part 40 of the digital network to external data sources 35, which for instance comprise databases, websites, FTP servers and the like, and/or to mobile connections 36. Observation module 31 retrieves the value of the desired input variables 4, preferably performs a quality check on the retrieved data and optionally converts the data into a usable format. A quality control of data can for instance relate to extreme values, missing data and/or to the reliability of data.

Prediction module 32 retrieves the input variables 4 and using the model of area 1 comprised in trained neural network 6 determines at positions in area 1 the future bottom depths resulting from the changed value of input variables 4. Prediction module 32 likewise performs post-processing of the output 7 and preferably also comprises failover mechanisms in the case a model calculation crashes and/or essential input variables are missing. The calculations of neural network 6 can be run on a regular basis. It is thus possible for instance to run the calculations daily, wherein the output 7 of neural network 6 for instance forms the initial conditions for the following day. Short-term predictions (3 to 14 days) increase the accuracy of the prediction, while long-term predictions (more than 14 days) can assist in discerning trends.

Decision module 33 supports the manager of area 1 and/or the operator of a bottom treatment device in interpreting the result of the prediction calculations (including the output data 7). Decision module 33 can also provide information relating to the reliability of the model predictions.

The input variables 4 and the results generated by the model are stored in databases (35, 43, 44). In their simplest form the databases comprise a file-oriented directory structure comprising the data, external predictions and model results in a standardized format. More complex applications such as SQL, PostgreSQL and/or Oracle are also possible. The Open Earth-oriented system known to the skilled person for data storage, post-processing and reporting is particularly useful.

Finally, warning module 34 brings together the information relating to the prediction as simple, specific results and compares the calculated future bottom depths at positions in the area 1 to a threshold value for these positions. Warning module 34 also comprises instructions for automatic transmission of prediction results, such as sending text messages to a mobile telephone 37 via a part 41 of the digital network in the case of an alarm, or sending concise reports via email to a workstation 38. If it is determined that threshold values have been exceeded, in a preferred embodiment warning module 34 initiates a feedback loop 39, wherein the model calculations can be repeated by prediction module 32 a number of times with changed dredging and/or dumping scenarios (such as for instance alternative routes) until preset threshold values for the bottom depths are reached.

In this embodiment the entered dredging process is automatically adjusted when threshold values for the bottom depth are exceeded until the threshold values are no longer being exceeded. The present or a foreseen future employment of bottom treatment devices is for instance adapted here.

In another embodiment it is likewise possible to allow partial intervention in the managing process by an operator. Device 8 comprises for this purpose a graphic user interface 42 which digitally visualizes data and predictions, for instance for the manager of area 1 or for the operator of the ground treatment device. This makes communication back and forth with the system possible. The graphic user interface 42 for instance makes it possible to visualize the bottom depth at positions, on the basis of which the managing process can be adapted when one or more threshold values are (in danger of being) exceeded.

The graphic user interface 42 more particularly comprises a configuration interface in which a manager can enter a choice relating to the type of dredging method to be applied, cycle times, net production times, overflow times of fine particles into the water, periods of standstill, dumping times, navigating speeds, starting and end positions of a dredging route, the position of dumping locations and estimated sediment spills. This list is not limitative and can be supplemented with other relevant input quantities.

The graphic user interface 42 further comprises a visualization interface in which the most recent prediction results, particularly bottom depths, are visualized, as well as the results of the comparison to threshold values. A suitable graphic user interface 42 has a section for each module (31, 32, 33, 34) and is web-based so that the results can be viewed remotely, if desired in a sheltered area.

The input variables 4 can be defined as fields (for instance for the bathymetry), as time series and/or as scalar quantities. Input variables 4 for instance comprise boundary conditions in the form of time series of water levels at the boundaries of area 1. These boundary conditions can for instance comprise calculated astronomical tides along the boundaries of area 1 and can for instance be obtained from available tide models. It will be self-evident that initial values have to be provided for all input variables in order to perform the calculations of trained neural network 6.

The input data 4 can further comprise time series of wind speed vectors at positions in area 1, and optionally of wave data. It is possible to obtain these data by point measurements of wind speed and wind direction. It may be appropriate to use 2-D wind and air pressure fields as input variables 4.

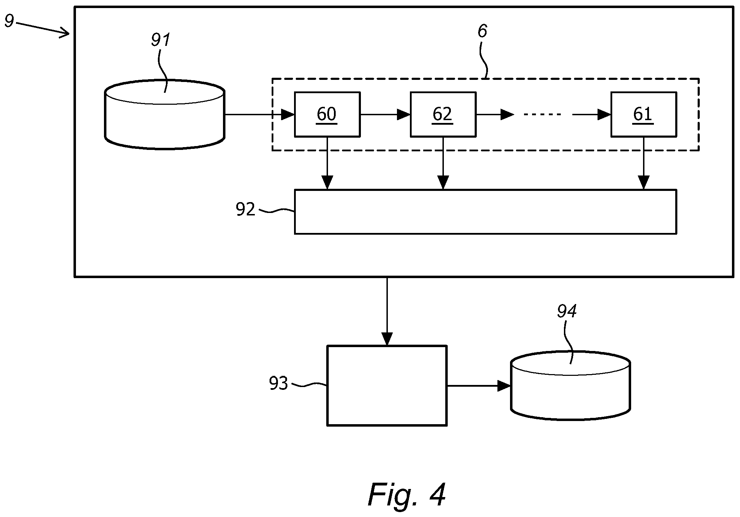

The neural network 6 with which the model calculations are performed is a trained neural network. Figure 4 illustrates an example of a device 9 for obtaining trained parameters of neural network 6. Training device 9 comprises a training database 91, a parameter value modifier 92 and a neural network 6 comprising a number of layers, for instance an input layer 60, an output layer 61, and second, third, fourth, ... layers 62. Training device 9 trains the layers (60, 61, 62, ...) of neural network 6 on the basis of training database 91. Training database 91 comprises a large number of values of input variables 4 and of corresponding output 7. During training, parameter value modifier 92 modifies the value of parameters of the chosen number of layers (60, 61, 62, ...) on the basis of losses via the first layer through the n^{th} layer, for instance using an iterative backpropagation algorithm. The loss can for instance comprise a mean squared error. In an example, wherein the training is performed with a backpropagation or gradient descent algorithm, gradients of the weights assigned to nodes of the neural network can be determined and the weights modified iteratively on the basis of the gradient. In this iterative training operation the parameter modification by parameter value modifier 92 can comprise additional usual operations such as model selection, Gaussian or Laplace regularization, and dropouts of layers and/or nodes. Training device 91 transmits the thus trained parameters 93 to a computer memory 94 for storage. The trained parameters can be stored in known manner in vectors, matrix or matrices, or in a different format for for instance multiple or respective multi-layers. The trained parameters 93 stored in computer memory 94 are then used to perform the calculations of trained neural network 6 and predict future bottom depths.

The data present in training database 91 can be measured but can also form the output of a combined hydrodynamic/sedimentation model which is based on physical principles. Such a hydrodynamic model of the area 1 to be treated and a sedimentation model coupled thereto can for instance be employed to generate a first training data set. Neural network 6 can then be trained additionally on the basis of (continuous) comparison between the output 7 calculated by network 6 and performed measurements of the current value of the output variables, in the present example bottom depths.

The output of the hydrodynamic model relates to water levels, flow speeds and directions and bottom shear stresses at positions in the area. The sedimentation model uses flow speeds and underwater bottom shear stresses which are calculated by the hydrodynamic model. The output of the sedimentation model for instance relates to the amount of bottom particles taken up in the water and eventually forming a deposit at positions in area 1. This results in altered bottom depths. Both models use the input variables 4 already described above, or at least some thereof.

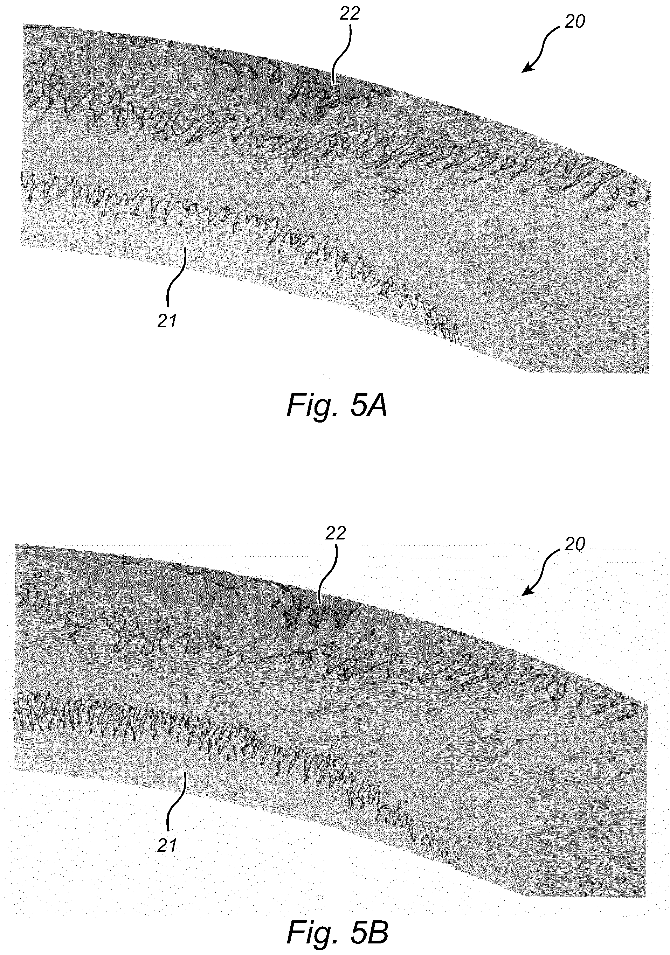

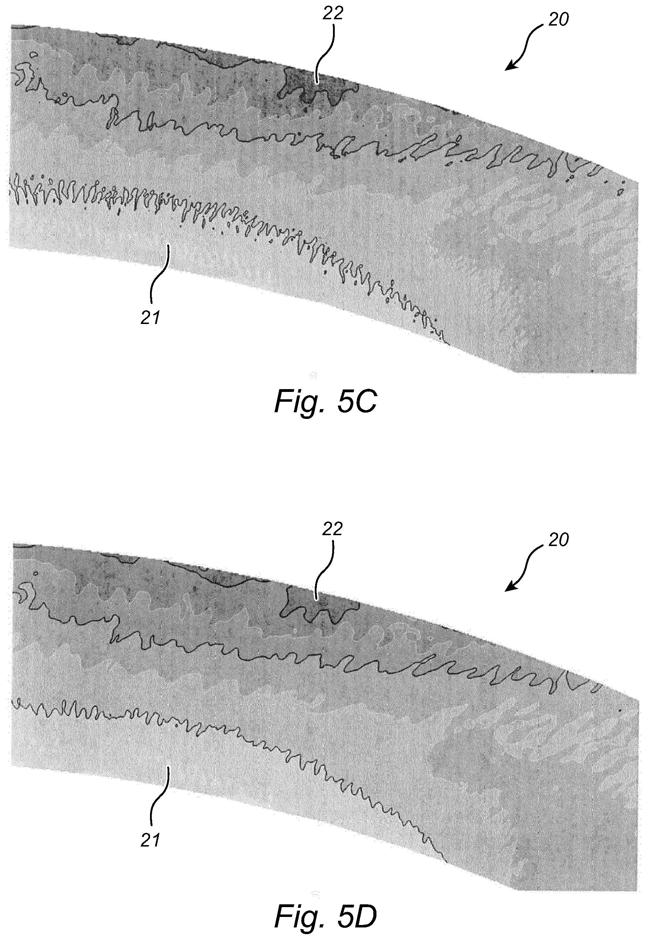

Referring to figures 5A, 5B, 5C and 5D, a bathymetry is shown of a river section 20. In a bathymetry the topographic height of a water bottom is measured, in the present case using sonar. The water depths are indicated in the figures with lines of equal depth (iso-depth lines), and a chart datum can be derived from the measured depths. The lightest areas 21 indicate the lowest water depth (shallowness), while the darkest areas 22 have the greatest depth. The areas between these two extremes have a depth lying between the lowest and the highest water depth, wherein the depth rises along with the degree of darkness.

Figure 5A shows a bathymetry of river section 20 measured at a starting time. Figure 5B likewise shows a measured bathymetry of the same river section 20, but 10 weeks later. A comparison of figures 5A and 5B shows that both erosion and deposition of bottom material has taken place in river section 20.

Figure 5C shows a bathymetry of river section 20 obtained with an embodiment of the method by means of a trained neural network. The bathymetry provides a prediction of the changes in bottom depths after 10 weeks, based on the bathymetry of figure 5A measured at the starting time. The predicted bathymetry of figure 5C shows a strong resemblance to the measured bathymetry of figure 5B.

Finally, figure 5D shows the bathymetry of figure 5C calculated (predicted) with a method according to the invention, wherein filtering has been applied in known manner in order to avoid extreme values.

With the invented method and system managing operations such as dredging, surveying, rock dumping, soil analysis and optionally even recovery of sunken objects can be performed in a relatively extensive area with the combination of time and position most optimal therefor. The trained neural network here provides for an update of the predictions which is notably faster than is possible with other models.

## Claims

1. Method for managing an underwater bottom in an area by means of dredging and/or arranging material at positions in the area with a device suitable for this purpose, comprising the following steps, taking place via a digital network under the control of a computer, of:
a) determining the current state of the underwater bottom at positions in the area by measuring a state value at the positions;
b) determining the value of input variables, which input variables can have an effect on the state value of the underwater bottom at the positions;
c) providing a trained artificial neural network, an input layer of which comprises the value of the input variables and an output layer the state value at the positions,
d) using the neural network to determine at the positions future state values of the underwater bottom resulting from the current value of the input variables;
e) comparing the future state values at the positions to a threshold value for the state at these positions; and
f) dredging and/or arranging material on the underwater bottom at those positions where the state value exceeds or falls below the threshold value.

2. Method according to claim 1, further comprising the step of determining the future state of the underwater bottom at positions in the area by measuring a state value at the positions.

3. Method according to claim 1 or 2, wherein the neural network comprises a convolutional neural network.

4. Method according to any one of the foregoing claims, wherein the neural network is self-learning and the value of weighting factors of the nodes is adjusted to measurements of the state value at the positions.

5. Method according to any one of the foregoing claims, wherein the state of the underwater bottom comprises the depth of the underwater bottom.

6. Method according to claim 5, wherein determination of the current state of the underwater bottom at positions in the area by measuring a state value at the positions comprises a bathymetry of the underwater bottom.

7. Method according to any one of the foregoing claims, wherein the input variables comprise dynamic parameters which change during a period associated with the management.

8. Method according to claim 7, wherein the input variables comprise, optionally predicted, quantities of precipitation, tidal currents, wind and wave fields, shipping movements and/or the production of a source of contamination.

9. Method according to claim 7 or 8, wherein the area is delimited by boundaries and the input variables comprise water levels and flow rates at the boundaries, particularly time series of water levels and flow rates at the boundaries.

10. Method according to claim 8 or 9, wherein the data relating to wind and wave fields comprise time series of respectively wind speed vectors and wave heights, periods and directions for positions in the area.

11. Method according to any one of the foregoing claims, wherein the state of the underwater bottom comprises the degree of contamination of the underwater bottom.

12. Method according to any one of the foregoing claims, comprising of dredging and/or arranging material on the underwater bottom at those positions where the state value exceeds or falls below the threshold value during a predetermined period of time.

13. Computer program comprising program instructions for performing of a method according to any one of the foregoing claims by a computer.

14. Computer configured to execute a computer program according to claim 13.

15. System for managing an underwater bottom in an area by means of dredging and/or arranging material at positions in the area with a device suitable for this purpose, comprising a central computer which is connected via a digital network to the device and which is configured to perform a method comprising at least the steps of:
a) determining the current state of the underwater bottom at positions in the area by measuring a state value at the positions;
b) determining the value of input variables, which input variables can have an effect on the state value of the underwater bottom at the positions;
c) providing a trained artificial neural network, an input layer of which comprises the value of the input variables and an output layer the state value at the positions,
d) using the neural network to determine at the positions future state values of the underwater bottom resulting from the current value of the input variables;
e) comparing the future state values at the positions to a threshold value for the state at these positions; and
f) dredging and/or arranging material on the underwater bottom at those positions where the state value exceeds or falls below the threshold value.
